# EUROPEAN PATENT SPECIFICATION

(11) **EP 1 629 924 B1**
(45) Date of publication and mention of the grant of the patent: **01.08.2012**
(21) Application number: 04706331.8
(22) Date of filing: 29.01.2004
(51) Int. Cl.: B23K 9/29, B23K 9/26, F23D 14/54

(54) **LASER PROCESSING NOZZLE, WELDING NOZZLE OR CONTACT TIP FOR WELDING, METHOD OF MANUFACTURING SUCH NOZZLE OR CONTACT TIP**
LASERBEARBEITUNGSDÜSE, SCHWEISSDÜSE ODER KONTAKTSPITZE ZUM SCHWEISSEN ; VERFAHREN ZUR HERSTELLUNG EINER SOLCHEN DÜSE ODER SPITZE
BUSE POUR USINAGE LASER,BUSE DE SOUDAGE OU BUSE CONTACT POUR SOUDAGE ; METHODE DE FABRICATION DE TELLE BUSE

(30) Priority: 04.06.2003 JP 2003158895
(43) Date of publication of application: 01.03.2006
(73) Proprietor: MITSUBISHI DENKI KABUSHIKI KAISHA, Chiyoda-ku Tokyo 100-8310 (JP)
(72) Inventor: GOTO, Akihiro, Chiyoda-ku, Tokyo 1008310 (JP); AKIYOSHI, Masao, Chiyoda-ku, Tokyo 1008310 (JP); SUGIURA, Tadanao, Nagoya-shi, Aichi 4620823 (JP); OCHIAI, Hiroyuki, Chiyoda-ku, Tokyo 1008182 (JP); WATANABE, Mitsutoshi, Chiyoda-ku, Tokyo 1008182 (JP)
(74) Representative: HOFFMANN EITLE
(86) International application number: PCT/JP2004/000803
(87) International publication number: WO 2004/108338

(56) References cited:
- DE-A1- 3 523 866
- JP-A- 1 180 785
- JP-A- 01 180 785
- JP-A- 01 197 076
- JP-A- 06 292 972
- JP-A- 54 085 430
- JP-A- 61 137 681
- JP-A- 61 296 969
- JP-A- 2003 230 962
- JP-B2- 03 227 454
- JP-U- 63 062 283
- JP-Y2- 04 042 067
- US-A- 5 900 167
- US-B1- 6 437 278

## Description

### TECHNICAL FIELD

The present invention relates to a technology for extending a life-span of a member that is used under a severe condition in particular to a method of forming a coating on a laser processing nozzle, a welding nozzle or a contact tip for welding and a laser processing nozzle, a welding nozzle or a contact tip for welding according to the preamble of claims 1 and 5 respectively (see, for example, JP61/296969).

### BACKGROUND ART

Conventionally, as for a discharge surface treatment technique for generating a pulsed electric discharge between an electrode and a workpiece in an oil-based processing fluid using a green compact obtained by compression-molding ceramic powders or a green compact obtained by heat treating the green compact as the electrode, and for forming a coating, which consists of an electrode material or a matter obtained by provoking a reaction of the electrode material by a discharge energy, on a surface of the workpiece using the discharge energy, there has been established a technique for forming, for example, a hard carbide coating on the surface of the workpiece (see, for example, International Publication No. 99/58744 Pamphlet, International Publication No. 01/05545 Pamphlet, and International Publication No. 01/23640 Pamphlet).

Further, as inventions relating to a welding nozzle or a contact tip for welding, there have been proposed techniques for lengthening a life-span of the nozzle or the contact tip (see, for example, Japanese Patent Application Laid-open No. H3-291169, Japanese Patent Application Laid-open No. S61-266189, Japanese Patent Application Laid-open No. S63-188477, and Japanese Patent Application Laid-open No. S61-111783).

Members such as a laser processing nozzle, a thermal spraying nozzle, a welding nozzle, and a contact tip for welding have only a short life-span, since they are used under severe conditions of exposure to heat and sputtering of a molten material. These members, therefore, need to be replaced frequently. Namely, they need to be replaced normally at several days' intervals or sometimes at several hours' intervals for members with short life-span.

The techniques disclosed in the literatures are intended to extend the life-spans of these members. The techniques disclosed in the literatures have, however, a disadvantage in that a sufficient effect cannot be achieved in improvement of the life-spans of such members. That is, it leaves much room for improvements on extending the life-span of such members used under these severe conditions.

Document JP 54 085430 A discloses a base of a burner tube made of a metal, wherein a ceramic layer, a nickel layer and a chromium layer are coated on the base.

Document US 6,437,278 B1 discloses a green compact electrode for discharge surface treatment.

Further known prior art documents are JP 01180785 A referring to a nozzle for welding, JP 61137681 and US 5,900,167 A disclosing a MIG welding apparatus.

### DISCLOSURE OF THE INVENTION

The present invention has been achieved in order to solve the above problems. It is an object of the present invention to greatly improve a disadvantageous short life-span of a member, such as a nozzle for a processing machine or a contact tip for welding, used under severe conditions, and to provide a nozzle for a processing machine and a contact tip for welding with a long life-span, and a method for manufacturing the nozzle for a processing machine and the contact tip for welding. These objects are achieved by a method according to claim 1, and a nozzle or contact tip according to claim 5. Further preferred embodiments are mentioned in the dependent claims.

According to the present invention, by forming the hard ceramic coating on the surface of the base metal, this nozzle/contact tip is constituted so that a surface of the nozzle/contact tip is made damage-resistant, and so that the nozzle/contact tip has strong resistance to heat. It is thereby possible to prevent the life-span of the nozzle/contact tip from being shortened due to occurrence of a flaw caused by contact of the workpiece with a burr during the processing, a heat-related deformation or the like, thereby ensuring that the nozzle/contact tip enjoys a long life-span.

The laser processing nozzle, welding nozzle or contact tip for welding according to the present invention can be, therefore, advantageously used continuously for a long time, and advantageously realize a considerable reduction in operation and a cost reduction.

According to the present invention, the metal-based coating mainly consists of at least one metal element selected from a group consisting of Cr, Ni, Fe, W, and Mo is formed on the hard ceramic coating.

Such a nozzle/contact tip is constituted so that the surface of the nozzle or contact tip is made flaw-resistant, has strong resistance to heat, and so that it becomes sputter-resistant. It is thereby possible to prevent the life-span of the nozzle/contact tip from being shortened due to occurrence of a flaw caused by contact of the workpiece with a burr during the processing, a heat-related deformation, a deformation caused by adhesion and separation of the sputtering material, a hole clogging or the like. It is, therefore, ensured that the life-span of the nozzle for a processing machine is extended.

The nozzle/contact tip according to the present invention can be, therefore, advantageously used continuously for a long time, and advantageously realize a considerable reduction in replacement operation and a cost reduction.

According to the present invention, the hard ceramic coating is formed in a processing fluid by a discharge surface treatment using a green compact electrode obtained by compression-molding powders mainly consisting of metallic powders that tend to be carbonated or metal carbide powders. Since the hard ceramic coating formed by such a discharge surface treatment has properties of being excellent in adhesiveness and being hard to separate, the hard ceramic coating is excellent in the effect of extending the life-span of the nozzle/contact tip for a processing machine. Accordingly, by providing the nozzle/contact tip with the hard ceramic coating formed by the discharge surface treatment, the nozzle for a processing machine having a remarkably long life-span can be realized.

### BRIEF DESCRIPTION OF THE DRAWINGS

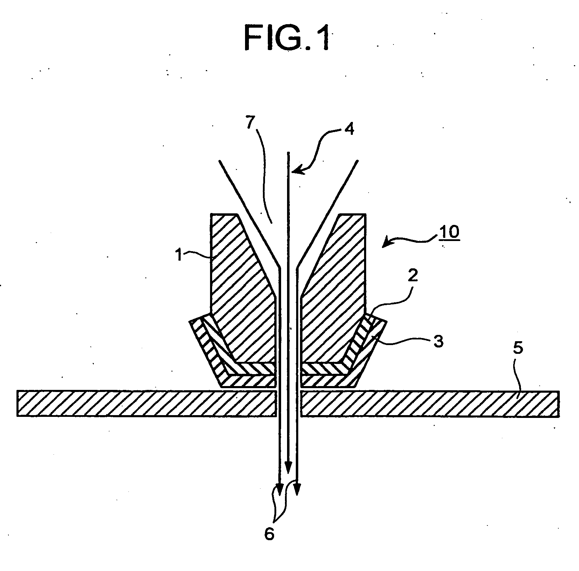

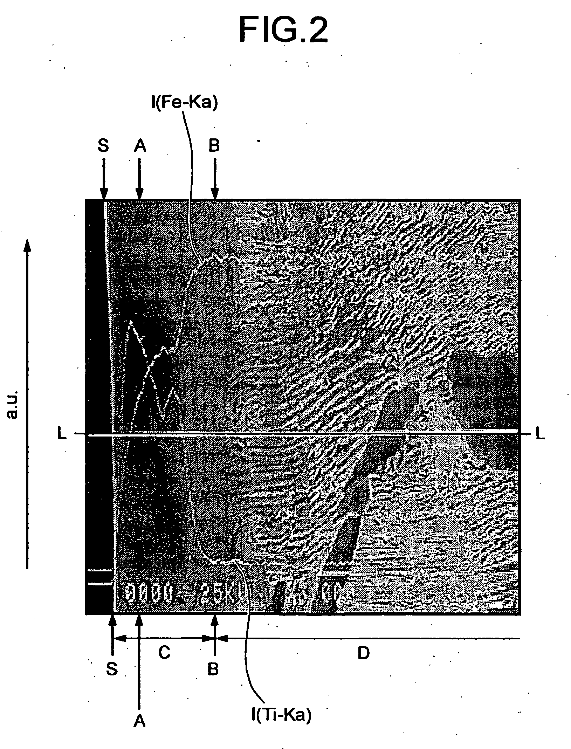

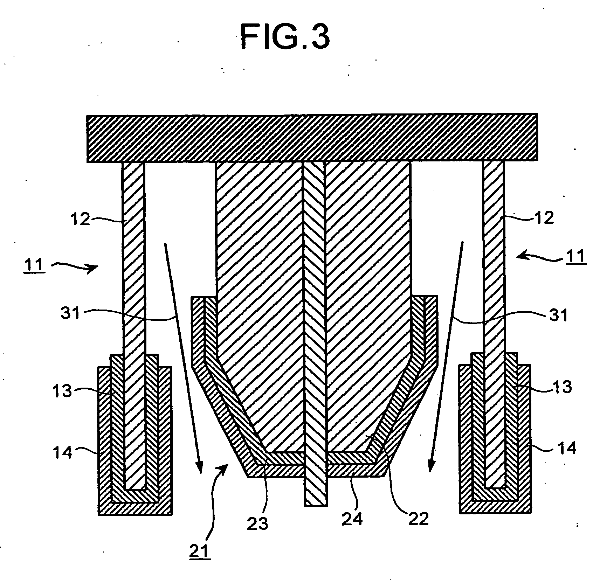

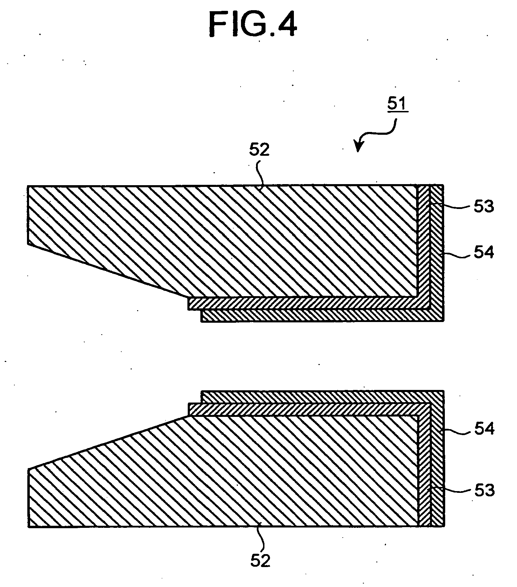

Fig. 1 is a cross section of a nozzle for a laser processing; Fig. 2 is a photograph of a cross section when a TiC coating is formed on a steel material; Fig. 3 is a cross section of a nozzle and a contact tip for welding; and Fig. 4 is a cross section of a nozzle for thermal spraying.

### BEST MODE FOR CARRYING OUT THE INVENTION

Exemplary embodiments of a nozzle for a processing machine, a contact tip for welding, and a method of manufacturing thereof according to the present invention will be explained below in detail with reference to the accompanying drawings. The present invention is not limited by the embodiments, and various modifications can be made without departing from the scope of the invention as defined in the appended claims. In the accompanying drawings, respective members are sometimes not shown to scale to facilitate understanding.

Fig. 1 is a schematic cross section for explaining a laser processing nozzle 10 according to a first embodiment of the present invention. A configuration of the laser processing nozzle 10 will be explained first with reference to Fig. 1. As shown in Fig. 1, the laser processing nozzle 10 according to this embodiment is constituted so that a TiC (titanium carbide) coating 2, which is a hard ceramic coating, is formed on a surface of a laser processing nozzle main unit 1 that mainly consists of a base metal of copper, iron, or aluminum, and so that a nickel chromium plating 3 is formed, as a metallic coating, on the hard ceramic or TiC coating. A penetrating hole 7 through which a laser beam 4 and an assist gas 6 are caused to pass is formed in a generally central portion of the laser processing nozzle 10. Through this penetrating hole 7, the laser beam 4 and the assist gas 6 are supplied in a direction of a workpiece 5.

Conventionally, it is common to make a laser processing nozzle of a material that mainly consists of Cu (copper). However, the conventional laser processing nozzle has a disadvantage of a short life-span resulting from a flaw that occurs when a workpiece contacts with a burr during a laser processing, a heat-related deformation, a deformation caused by adhesion and separation of a sputtering material, a hole clogging, or the like.

Considering the conventional disadvantage, the laser processing nozzle 10 according to this embodiment includes the laser processing nozzle main unit 1 that mainly consists of the base metal such as copper, iron, or aluminum, the TiC (chromium carbide) coating 2 that is the hard ceramic coating formed on the surface of the laser processing nozzle main unit 1, and the nickel chromium plating 3 that is the metal coating formed on the Tic (titanium carbide) coating 2.

By thus constituting the laser processing nozzle 10 according to this embodiment, the surface of the laser processing nozzle 10 is made flaw-resistant, the nozzle 10 has strong resistance to heat, and the nozzle 10 is made sputter-resistant. It is thereby possible to prevent the life-span of the nozzle 10 from being shortened due to occurrence of a flaw caused by contact of the workpiece 5 with a burr during the laser processing, the heat-related deformation, the deformation caused by adhesion and separation of the sputtering material, the hole clogging or the like. It is, therefore, ensured that the life-span of the nozzle 10 is extended.

Namely, the laser processing nozzle 10 according to this embodiment enjoys a remarkably long life-span and can be used continuously for a long time. A considerable reduction in replacement operation and a cost reduction can be thereby realized.

The hard ceramic coating is made of a ceramic material having a Vickers hardness of 1,000 or more. As the material other than titanium carbide (TiC) for such a hard ceramic coating, titanium nitride (TiN), silicon carbide (SiC), boron carbide (B₄C), chromium carbide (e.g., Cr₃C₂), vanadium carbide (VC), zirconium carbide (ZrC), niobium carbide (e.g., NbC), molybdenum carbide (e.g., MoC), tungsten carbide (WC) is, according to the present invention, used. Among these, when titanium carbide (TiC) is used as hard ceramics, a greatest effect of extending the life-span of the laser processing nozzle 10 is obtained according to a result of an experiment conducted by the inventor of the present invention.

Furthermore, a similar effect can be recognized even when the metallic coating formed on the hard ceramic coating is made of a metallic material, other than nickel chromium, mainly consisting of a metallic element such as Cr (chromium), Ni (nickel), Fe (iron), W (tungsten), or Mo (molybdenum). These metallic elements exhibit a common property of having a relatively high melting point over a thousand degrees Celsius.

Among these metallic elements, Cr, Mo, and W are materials that form oxides at high temperature and exhibit lubricity. By using the metallic coating mainly consisting of one of these elements, adhesion of the sputtering material to the nozzle 10 can be effectively prevented.

As a method for forming the metallic coating (nickel chromium plating in this embodiment) on an outermost surface of the laser processing nozzle 10, various methods including plating and evaporation are available. In addition, even when this metallic coating is formed by different methods, no great difference is recognized in extension of the life-span of the laser processing nozzle 10. Meanwhile, the experiment conducted by the inventor of the present invention has discovered that the hard ceramic coating that is an intermediate layer between the laser processing nozzle main unit 1 and the metallic coating has the greatest effect of extending the life-span of the nozzle 10 when a discharge surface treatment method, according to the present invention, to be explained hereafter is used for forming the hard ceramic coating.

The discharge surface treatment is the method disclosed in pamphlets of International Publication Nos. 99/55744, 01/05545, 01/23640, and the like. According to the discharge surface treatment, a voltage is applied between a green compact obtained by compression-molding metallic powders that are easily carbonated or a green compact obtained by heat-treating the green compact and a workpiece to generate a pulsed electric discharge, thereby forming a coating made of a metallic carbide obtained by carbonating the electrode material and formed on the workpiece.

The hard carbide coating formed by this discharge surface treatment has properties of being excellent in adhesiveness and being hard to separate. A possible reason is because a gradient property of the coating that the surface of the coating contains many hard carbides, and a ratio of a base material is higher at a position nearer to a center of the coating.

By way of example, a photograph of a cross section when the TiC coating is formed on the workpiece made of a steel material is shown in Fig. 2. In Fig. 2, a line A-A denotes positions on the surface of the workpiece (base material), before the TiC coating is formed. A line S-S denotes positions on the surface of the workpiece after the TiC coating is formed. The TiC coating is formed in a region C between the line S-S and the line B-B. In Fig. 2, a region D on the right of the line B-B is a region of the workpiece (base material) after the TiC coating is formed.

Fig. 2 also depicts that characteristic curves Fe-Kα and Ti-kα that depict content ratios of iron to titanium obtained when a composition analysis is performed on the Fe-Kα and Ti-k along a line L-L of Fig. 2 are superimposed on the photograph of the cross section. An axis of ordinates (a. u.) shown on the left of the photograph of Fig. 2 indicates an intensity of each of the characteristic curves.

The analysis is performed on the intensities of the characteristic curves Fe-Kα and Ti-kα along the line L-L of Fig. 2. In Fig. 2, the characteristic curve I(Fe-Kα) indicates an iron content. The higher the value of this curve is, the higher the iron content becomes. The characteristic curve I(Ti-kα) indicates a titanium content. The higher the value of this curve is, the higher the titanium content becomes.

As can be seen from Fig. 2, the content of the titanium (Ti) element is higher and the content of iron (Fe) serving as the base material is gradually higher a position nearer to the surface of the workpiece. The reason that the intensity of the Ti-kα is lower near the outermost surface of the workpiece is sagging of an edge of a specimen. When the present invention is carried out, the Ti content is actually high on the outermost surface of the workpiece.

The present invention will be explained more specifically based on a result of an evaluation test. An instance of conducting a life-span evaluation test to a copper laser processing nozzle obtained by forming a TiC coating on a laser processing nozzle main unit made of copper by the discharge surface treatment, and by further forming a nickel chromium plating on the TiC coating will be explained herein.

The evaluation test is conducted using the following four types of samples.

### <Laser processing nozzles>

### (Sample 1)

A copper laser processing nozzle (conventional nozzle)

### (Sample 2)

A copper laser processing nozzle having a nickel chromium plating formed on the surface of the nozzle

### (Sample 3)

A copper laser processing nozzle having a TiC coating formed on the surface of the nozzle by the discharge surface treatment (Sample 4), according to the present invention.

A copper laser processing nozzle having a TiC coating formed on the surface of the nozzle by the discharge surface treatment, and having a nickel chromium plating further formed on the TiC coating

Contents of the evaluation and sample life-spans (in comparison with a life-span of the sample 1 that is assumed as 1) are shown in Table 1.

**Table 1**

| | | Evaluation contents | Life-span |
|---|---|---|---|
| Sample 1 | A copper laser processing nozzle (conventional nozzle) | Soft and easily flawed, and a sputtering material tends to adhere to the nozzle. | 1 |
| Sample 2 | A copper laser processing nozzle having a nickel chromium plating formed on the surface of the nozzle | The surface is hardened but same as Sample 1. | 1.5 |
| Sample 3 | A copper laser processing nozzle having a TiC coating formed on the surface of the nozzle by the discharge surface treatment | The surface is hardened, but a sputtering material adheres to the nozzle and the coating is separated after being used for a long time. | 2 |
| Sample 4 | A copper laser processing nozzle having a TiC coating formed on the surface of the nozzle by the discharge surface treatment, and having a nickel chromium plating formed on the TiC coating | The surface is lower in hardness than Sample 3, but the surface becomes flaw-resistant and sputter-resistant | 50 |

As shown in the Table 1, the life-spans of even the sample 2 (the copper laser processing nozzle having the nickel chromium plating formed on the surface of the nozzle) and the sample 3 (the copper laser processing nozzle having the TiC coating formed on the nozzle by the discharge surface treatment) can be slightly extended. As the samples 2 and 3 are compared, the sample 3 exhibits a greater life-span extending effect. Namely, it can be said that when the TiC coating is formed on the copper laser processing nozzle by the discharge surface treatment, a certain degree of favorable life-span extension effect can be obtained.

Meanwhile, the sample 4 (the copper laser processing nozzle having the TiC coating formed on the surface of the nozzle by the discharge surface treatment, and having the nickel chromium plating further formed on the TiC coating) exhibits a far greater effect than those of the samples 2 and 3. Causes for remarkably extending the life-span of the sample 4 are supposed as follows.

Copper has good heat conductivity but has a high melting point. Conversely, TiC has inferior heat conductivity and has a high melting point. When the heat conductivity is low, temperature tends to rise locally. Due to this, the sputtering material tends to adhere to the nozzle, which possibly causes a damage on the coating. However, the coating formed by the discharge surface treatment is the coating that has the gradient property, and the hard TiC coating is the coating that is promptly blended with a copper component having the excellent heat conductivity. Accordingly, it is considered that the coating is formed into an ideal coating that can prevent melting by the heat using the TiC component having the high melting point and formed on the surface of the nozzle, and that can promptly release the heat entering the laser processing nozzle using the copper component having the good heat conductivity and formed just under the coating.

The hard ceramic coating formed by the discharge surface treatment has, according to the present invention, a surface roughness as high as 10 micrometers and a thickness of the coating has a large fluctuation. For these reasons, the life-span extending effect can be achieved only by using the hard ceramic coating. However, it is considered that the effect of extending the life-span of the laser processing nozzle is restricted when only the hard ceramic coating is formed. To compensate for the restricted effect, the surface of the hard ceramic coating formed by the discharge surface treatment is covered with the metallic coating of nickel chromium or the like that has relatively a high melting point. This is the concept of the present invention.

While the instance of using the copper laser processing nozzle main unit as the laser processing nozzle main unit in the evaluation test has been explained, it is confirmed by an experiment that a similar effect can be achieved even when a laser processing nozzle main unit made of iron (Fe) or made of aluminum (Al) is used.

According to the present invention, therefore, it is possible to provide the laser processing nozzle which is far more flaw-resistant, to which the less sputtering material adheres, and which enjoys a long life-span, as compared with the conventional laser processing nozzle.

The test is conducted by continuous processing for cutting a sheet metal by a laser. It is also confirmed that the life-span of even the nozzle in the form of the sample 3 can be sufficiently extended in a processing in which the heat does not intensively enter the nozzle such as piecing. This is because a damage caused by the burr generated by the processing contacts with the nozzle is greater than a damage caused by the heat, in the processing such as piercing. The nozzle can sufficiently resist such a damage only by the hardness of the coating.

The same disadvantage as that for the laser processing explained in the first embodiment also occurs to welding. Namely, a life-span of a welding nozzle and a life-span of a contact tip for welding are shortened due to heat or adhesion of a sputtering material.

Similarly to the first embodiment, therefore, a hard ceramic coating is formed on a surface of the welding nozzle and that of the contact tip for welding, whereby the life-spans of the nozzle and tip can be extended. Further, a predetermined metallic coating is formed on each hard ceramic coating, whereby the life-span of each of the welding nozzle and the contact tip for welding can be advantageously extended more effectively. Thanks to these, the welding nozzle and the contact tip for welding can be used continuously for a long time, thereby making it possible to provide a welding nozzle and a contact tip for welding that realize a great reduction in replacement operation and a cost reduction.

The welding nozzle and the contact tip for welding according to a second embodiment will be explained next. Fig. 3 is a schematic cross section for explaining a welding nozzle 11 and a contact tip for welding 21 according to the second embodiment of the present invention.

A configuration of the welding nozzle 11 and that of the contact tip for welding 21 according to this embodiment will be explained first with reference to Fig. 3. As shown in Fig. 3, the welding nozzle 11 according to this embodiment is constituted so that a TiC (titanium carbide) coating 13, which is a hard ceramic coating, is formed by the discharge surface treatment on a surface of a welding nozzle main unit 12 that mainly consists of a base metal of copper, iron, or aluminum, and so that a nickel chromium plating 14 is further formed, as a metallic coating, on the TiC coating 13 that is the hard ceramic coating.

Further, as shown in Fig. 3, the contact tip for welding 21 according to this embodiment is constituted so that a TiC (titanium carbide) coating 23, which is a hard ceramic coating, is formed by the discharge surface treatment on a surface of a contact tip for welding main unit 22 that mainly consists of a base metal of copper, iron, or aluminum, and so that a nickel chromium plated layer 24 is further formed as a metallic coating on the TiC coating 23 that is the hard ceramic coating.

A penetrating hole that penetrates a central portion of the contact tip for welding 21 in a longitudinal direction is formed in the contact tip for welding 21. A welding rod 25 is arranged in the penetrating hole. During welding, a shield gas 31 is supplied to a region between the welding nozzle 11 and the contact tip for welding 21.

By thus constituting the welding nozzle 11 and the contact tip for welding 21 according to this embodiment, the welding nozzle 11 and the contact tip for welding 21 have strong heat resistance during the welding, and the welding nozzle 11 and the contact tip for welding 21 are made sputter-resistant. It is thereby possible to prevent the life-spans of the welding nozzle 11 and the contact tip for welding 21 from being shortened due to a heat-related deformation during the welding, a deformation caused by adhesion and separation of the sputtering material, or the like. It is thus ensured that the life-spans of the welding nozzle 11 and the contact tip for welding 21 are extended.

Namely, the welding nozzle 11 and the contact tip for welding 21 according to this embodiment have remarkably long life-spans and can be used continuously for a long time. The considerable reduction in replacement operation and the cost reduction are, therefore, realized.

Similarly to the first embodiment, as the material for the hard ceramic coating, titanium carbide (TiC), titanium nitride (TiN), silicon carbide (SiC), boron carbide (B₄C), chromium carbide (e.g., Cr₃C₂), vanadium carbide (VC), zirconium carbide (ZrC), niobium carbide (e.g., NbC), molybdenum carbide (e.g., MoC), tungsten carbide (WC) is, according to the present invention, used.

Furthermore, the metallic coating formed on the hard ceramic coating can be a coating made of a metallic material, other than nickel chromium, manly consisting of a metallic element such as Cr (chromium), Ni (nickel), Fe (iron), W (tungsten), or Mo (molybdenum). Among these metallic elements, when the metallic coating mainly consisting of one of Cr, Mo, or W, adhesion of the sputtering material to the welding nozzle 11 and the contact tip for welding 21 can be effectively prevented.

The present invention will be explained more specifically based on a result of an evaluation test. An instance of conducting a life-span evaluation test to a copper welding nozzle obtained by forming a TiC coating on a welding nozzle main unit made of copper by the discharge surface treatment, and by further forming a nickel chromium plating on the TiC coating will be explained herein.

In addition, an instance of conducting a life-span evaluation test to a copper contact tip for welding obtained by forming a TiC coating on a contact tip for welding main unit made of copper by the discharge surface treatment, and by further forming a nickel chromium plating on the TiC coating will be explained herein.

Each evaluation test is conducted using the following four types of samples.

### <Contact tip for welding>

### (Sample 5)

A copper welding nozzle (conventional nozzle)

### (Sample 6)

A copper welding nozzle having a nickel chromium plating formed on the surface of the nozzle

### (Sample 7)

A copper welding nozzle having a TiC coating formed on the surface of the nozzle by the discharge surface treatment

### (Sample 8), according to the present invention

A copper welding nozzle having a TiC coating formed on the surface of the nozzle by the discharge surface treatment, and having a nickel chromium plating further formed on the TiC coating

Contents of the evaluation and sample life-spans (in comparison with a life-span of the sample 5 that is assumed as 1) are shown in Table 2.

### <Welding nozzles>

### (Sample 9)

A copper contact tip for welding (conventional nozzle)

### (Sample 10)

A copper contact tip for welding having a nickel chromium plating formed on the surface of the tip

### (Sample 11)

A copper contact tip for welding having a TiC coating formed on the surface of the tip by the discharge surface treatment (Sample 12), according to the present invention

**Table 2**

| | | Evaluation contents | Life-span |
|---|---|---|---|
| Sample 5 | A copper welding nozzle (conventional nozzle) | Soft and easily flawed, and a sputtering material tends to adhere to the nozzle. | 1 |
| Sample 6 | A copper welding nozzle having a nickel chromium plating formed on the surface of the nozzle | The surface is hardened but same as Sample 5. | 1.5 |
| Sample 7 | A copper welding nozzle having a TiC coating formed on the surface of the nozzle by the discharge surface treatment | The surface is hardened, but a sputtering material adheres to the nozzle and the coating is separated after being used for a long time. | 2 |
| Sample 8 | A copper welding nozzle. having a TiC coating formed on the surface of the nozzle by the discharge surface treatment, and having a nickel chromium plating formed on the TiC coating | The surface is lower in hardness than Sample 7, but the surface becomes flaw-resistant and sputter-resistant | 5 |

A copper contact tip for welding having a TiC coating formed on the surface of the tip by the discharge surface treatment, and having a nickel chromium plating further formed on the TiC coating

Contents of the evaluation and sample life-spans (in comparison with a life-span of the sample 9 that is assumed as 1) are shown in Table 3.

| Table 3 | | | |
|---|---|---|---|
| | | Evaluation contents | Life-span |
| Sample 9 | A copper contact tip for welding (conventional nozzle) | Soft and easily flawed, and a sputtering material tends to adhere to the tip. | 1 |
| Sample 10 | A copper contact tip for welding having a nickel chromium plating formed on the surface of the tip | The surface is hardened but same as Sample 9. | 1.5 |
| Sample 11 | A copper contact tip for welding having a TiC coating formed on the surface of the tip by the discharge surface treatment | The surface is hardened, but a sputtering material adheres to the tip and the coating is separated after being used for a long time. | 2 |
| Sample 12 | A copper contact tip for welding having a TiC coating formed on the surface of the tip by the discharge surface treatment, and having a nickel chromium plating formed on the TiC coating | The surface is lower in hardness than Sample 11, but the surface becomes flaw-resistant and sputter-resistant | 4 |

As shown in the Table 2, the life-spans of even the sample 6 (the copper welding nozzle having the nickel chromium plating formed on the surface of the nozzle) and the sample 7 (the copper welding nozzle having the TiC coating formed on the nozzle) can be slightly extended. As the samples 6 and 7 are compared, the sample 7 exhibits a greater life-span extending effect. Namely, it can be said that when the TiC coating is formed on the copper welding nozzle by the discharge surface treatment, a certain degree of favorable life-span extension effect can be obtained.

Meanwhile, the sample 8 (the copper welding nozzle having the TiC coating formed on the surface of the nozzle by the discharge surface treatment, and having the nickel chromium plating further formed on the TiC coating) exhibits a greater effect than those of the samples 6 and 7, although the effect is not so greater than that of the laser nozzle.

As shown in the Table 3, the life-spans of even the sample 10 (the copper contact tip for welding having the nickel chromium plating formed on the surface of the tip) and the sample 11 (the copper contact tip for welding having the TiC coating formed on the tip) can be slightly extended. When the samples 10 and 11 are compared, the sample 11 exhibits a greater life-span extending effect. Namely, it can be said that when the TiC coating is formed on the copper contact tip for welding by the discharge surface treatment, a certain degree of favorable life-span extension effect can be obtained.

Meanwhile, the sample 12 (the copper contact tip for welding having the TiC coating formed on the surface of the tip by the discharge surface treatment, and having the nickel chromium plating further formed on the TiC coating) exhibits a greater effect than those of the samples 10 and 11.

Causes for remarkably extending the life-spans of the samples 8 and 12 are supposed as follows.

Copper has good heat conductivity but has a high melting point. Conversely, TiC has inferior heat conductivity and has a high melting point. When the heat conductivity is low, temperature tends to rise locally. Due to this, the sputtering material tends to adhere to the nozzle, which possibly causes a damage on the coating. However, the coating formed by the discharge surface treatment is the coating that has the gradient property, and the hard TiC coating is the coating that is promptly blended with a copper component having the good heat conductivity. Accordingly, it is considered that the coating is formed into an ideal coating that can prevent melting by the heat using the TiC component having the high melting point and formed on the surface of the nozzle or contact tip, and that can promptly release the heat entering the welding nozzle and the contact tip for welding using the copper component having the good heat conductivity and formed just under the coating.

The hard ceramic coating formed by the discharge surface treatment has a surface roughness as high as 10 micrometers and a thickness of the coating has a large fluctuation. The life-span extending effect can be achieved only by using the hard ceramic coating. However, it is considered that the effect of extending the life-span of the welding nozzle or the contact tip for welding is restricted when only the hard ceramic coating is formed. To compensate for the restricted effect, the surface of the hard ceramic coating formed by the discharge surface treatment is covered with the metallic coating of nickel chromium or the like that has relatively a high melting point. This is the concept of the present invention, as defined in the claims.

A temperature of the contact tip for welding, in particular, is as high as several hundreds of degrees Celsius because of direct conduction of a welding heat. When the temperature of the contact tip for welding is high, Cr (chromium) contained in the nickel chromium plated coating is oxidized into Cr₂O₃ (chromium oxide), which exhibit lubricity. It is, therefore, supposed that the surface of the contact tip for welding is advantageously made deposit-resistant.

While the instances of using the copper welding nozzle main unit and the copper contact tip for welding main unit as the welding nozzle main unit and the contact tip for welding main unit, respectively, in the evaluation tests have been explained, it is confirmed by an experiment that a similar effect can be achieved even when a welding nozzle main unit made of iron (Fe) or made of aluminum (Al), or a contact tip for welding main unit made of iron (Fe) or made of aluminum (Al) is used.

According to the present invention, therefore, it is possible to achieve the welding nozzle and the contact tip for welding that enjoy long life-spans, as compared with the conventional welding nozzle and the conventional contact tip for welding. It is thereby possible to provide the welding nozzle and the contact tip for welding that can be used continuously for a long time, which can realize a considerable reduction in replacement operation and a cost reduction.

Thermal spraying is a method for spraying a molten material from a nozzle and for causing the material to adhere to a surface of a workpiece. The same disadvantage as that for the laser processing explained in the first embodiment occurs to the thermal spraying.

Similarly to this example not covered by the present invention, therefore, a hard ceramic coating is formed on a surface of a thermal spraying nozzle, whereby a life-span of the thermal spraying nozzle can be extended. Further, a predetermined metallic coating is formed on the hard ceramic coating, whereby the life-span of the thermal spraying nozzle can be advantageously extended more effectively. Thanks to these, the thermal spraying nozzle can be used continuously for a long time, thereby making it possible to provide a thermal spraying nozzle that realizes a great reduction in replacement operation and a cost reduction.

The thermal spraying nozzle according to this example will be explained next. Fig. 4 is a schematic cross section for explaining a thermal spraying nozzle 51.

A configuration of the thermal spraying nozzle 51 will be explained first with reference to Fig. 4. As shown in Fig. 4, the thermal spraying nozzle 51 is constituted such that a TiC (titanium carbide) coating 53, which is a hard ceramic coating by the discharge surface treatment, is formed on a surface of a thermal spraying nozzle main unit 52 that mainly consists of a base metal of copper, iron, or aluminum, and so that a nickel chromium plating 54 is further formed, as a metallic coating, on the TiC coating 53 that is the hard ceramic coating.

By thus constituting the thermal spraying nozzle 51, the thermal spraying nozzle 51 has strong heat resistance during the welding and the thermal spraying nozzle 51 is made sputter-resistant. It is thereby possible to prevent the life-span of the thermal spraying nozzle 51 from being shortened due to a heat-related deformation during the welding, a deformation caused by adhesion and separation of the sputtering material, or the like. It is thus ensured that the life-span of the thermal spraying nozzle 51 is extended.

Namely, the thermal spraying nozzle 51 has a remarkably long life-span and can be used continuously for a long time. The considerable reduction in replacement operation and the cost reduction are, therefore, realized.

As the material for the hard ceramic coating and the metallic coating formed on the hard ceramic coating according to this embodiment, the same materials as those according to the first embodiment can be used.

The present invention will be explained more specifically based on a result of an evaluation test. An instance of conducting a life-span evaluation test to a copper thermal spraying nozzle obtained by forming a TiC coating on a thermal spraying nozzle main unit made of copper by the discharge surface treatment, and by further forming a nickel chromium plating on the TiC coating will be explained herein.

The evaluation test is conducted using the following four types of samples.

### <Thermal spraying nozzles>

### (Sample 13)

A copper thermal spraying nozzle (conventional nozzle)

### (Sample 14)

A copper thermal spraying nozzle having a nickel chromium plating formed on the surface of the nozzle

### (Sample 15)

A copper thermal spraying nozzle having a TiC coating formed on the surface of the nozzle by the discharge surface treatment

### (Sample 16)

A copper thermal spraying nozzle having a TiC coating formed on the surface of the nozzle by the discharge surface treatment, and having a nickel chromium plating further formed on the TiC coating

Contents of the evaluation and sample life-spans (in comparison with a life-span of the sample 13 that is assumed as 1) are shown in Table 4.

**Table 4**

| | | Evaluation contents | Life-span |
|---|---|---|---|
| Sample 13 | A copper thermal spraying nozzle (conventional nozzle) | Soft and easily flawed, and a sputtering material tends to adhere to the nozzle. | 1 |
| Sample 14 | A copper thermal spraying nozzle having a nickel chromium plating formed on the surface of the nozzle | The surface is hardened but same as Sample 13. | 1.5 |
| Sample 15 | A copper thermal spraying nozzle having a TiC coating formed on the surface of the nozzle by the discharge surface treatment | The surface is hardened, but a sputtering material adheres to the nozzle and the coating is separated after being used for a long time. | 2 |
| Sample 16 | A copper thermal spraying nozzle having a TiC coating formed on the surface of the nozzle by the discharge surface treatment, and having a nickel chromium plating formed on the TiC coating | The surface is lower in hardness than Sample 15, but the surface becomes flaw-resistant and sputter-resistant | 4 |

As shown in the Table 4, the life-spans of even the sample 14 (the copper thermal spraying nozzle having the nickel chromium plating formed on the surface of the nozzle) and the sample 15 (the copper thermal spraying nozzle having the TiC coating formed on the nozzle) can be slightly extended. When the samples 14 and 15 are compared, the sample 15 exhibits a greater life-span extending effect. Namely, it can be said that when the TiC coating is formed on the copper thermal spraying nozzle by the discharge surface treatment, a certain degree of favorable life-span extension effect can be obtained.

Meanwhile, the sample 16 (the copper thermal spraying nozzle having the TiC coating formed on the surface of the nozzle by the discharge surface treatment, and having the nickel chromium plating further formed on the TiC coating) exhibits a greater effect than those of the samples 14 and 15.

Causes for remarkably extending the life-span of the sample 16 are supposed as follows.

Copper has good heat conductivity but has a high melting point. Conversely, TiC has inferior heat conductivity and has a high melting point. When the heat conductivity is low, temperature tends to rise locally. Due to this, the sputtering material tends to adhere to the nozzle, which possibly causes a damage on the coating. However, the coating formed by the discharge surface treatment is the coating that has the gradient property, and the hard TiC coating is the coating that is promptly blended with a copper component having the excellent heat conductivity. Accordingly, it is considered that the coating is formed into an ideal coating that can prevent melting by the heat using the TiC component having the high melting point and formed on the surface of the nozzle, and that can promptly release the heat entering the thermal spraying nozzle using the copper component having the good heat conductivity and formed just under the coating.

The hard ceramic coating formed by the discharge surface treatment has a surface roughness as high as 10 micrometers and a thickness of the coating has a large fluctuation. The life-span extending effect can be achieved only by using the hard ceramic coating. However, it is considered that the effect of extending the life-span of the thermal spraying nozzle is restricted when only the hard ceramic coating is formed. To compensate for the restricted effect, the surface of the hard ceramic coating formed by the discharge surface treatment is covered with the metallic coating of nickel chromium or the like that has relatively a high melting point.

A temperature of the thermal spraying nozzle, in particular, is as high as several hundreds of degrees Celsius because of direct conduction of a welding heat. When the temperature of the thermal spraying nozzle is high, Cr (chromium) contained in the nickel chromium plated coating is oxidized into Cr₂O₃ (chromium oxide), which exhibit lubricity. It is, therefore, supposed that the surface of the thermal spraying nozzle is advantageously made deposit-resistant.

The instance of using the copper thermal spraying nozzle main unit as the thermal spraying nozzle main unit in the evaluation test has been explained. However, it is confirmed by an experiment that a similar effect can be achieved even when a thermal spraying nozzle main unit made of iron (Fe) or made of aluminum (Al) is used.

It is possible to achieve the thermal spraying nozzle which enjoys a long life-span, as compared with the conventional thermal spraying nozzle. It is thereby possible to provide the thermal spraying nozzle that can be used continuously for a long time, which can realize a considerable reduction in replacement operation and a cost reduction.

## Claims

1. A method of forming a coating on a laser processing nozzle, a welding nozzle or a contact tip for welding, the method being **characterized by** the following steps :
forming a hard ceramic coating (2) with a surface roughness of approximately 10 micrometers and large fluctuations in thickness on a surface (1) of a base metal by a discharge surface treatment in a processing fluid using a green-compact electrode obtained by compressing and molding powders mainly consisting of metallic powders that tend to be carbonated or metal carbide powders; wherein
the hard ceramic coating (2) is mainly consisting of at least one metal element selected from a group consisting of TiC, TiN, SiC, B₄C, Chromium carbide, VC, ZrC, niobium carbide, molybdenum carbide and WC, and
has a concentration of the base metal content higher at a position nearer to the surface, and
forming a metal-based coating (3) on the hard ceramic coating, the metal-based coating mainly consisting of at least one metal element selected from a group consisting of Cr, Ni, Fe, W, and Mo.

2. Method of manufacturing a laser processing nozzle, a welding nozzle or a contact tip for welding, the method comprising:
manufacturing a body of the laser processing nozzle, the welding nozzle or the contact tip, the body having a metal surface; and
forming the coating of claim 1 on the metal surface (1) of the body.

3. Method according to claim 2, wherein
the metal-based coating (3) is formed by a surface treatment.

4. Method according to any of claims 1 to 3, wherein the base metal mainly consists of any one of copper, iron or aluminium.

5. A laser processing nozzle, a welding nozzle or a contact tip for welding, comprising:
a body having a metal surface (1); and
a coating formed on the metal surface of the body, **characterized in that** the coating includes
a hard ceramic coating (2) formed on the metal surface of the body, and
a metal-based coating (3),
wherein the metal-based coating (3) mainly consisting of at least one metal element selected from a group consisting of Cr, Ni, Fe, W, and Mo formed on the hard ceramic coating,
wherein the hard ceramic coating (2) has a surface roughness of approximately 10 micrometers, a thickness of the hard ceramic coating (2) having large fluctuations, and has a Vickers hardness of 1,000 or more, and
is mainly consisting of at least one metal element selected from a group consisting of TiC, TiN, SiC, B₄C, Chromium carbide, VC, ZrC, niobium carbide, molybdenum carbide and WC, and
the hard ceramic coating (2) has a concentration of a base metal of the body content higher at a position nearer the metal surface.

6. A nozzle or a contact tip for welding according to claim 5, wherein the body mainly consists of any one of copper, iron or aluminium.

## Patentansprüche

1. Verfahren zum Ausbilden einer Beschichtung auf einer Laserbearbeitungsdüse, einer Schweißdüse oder einer Kontaktspitze zum Schweißen, das Verfahren **gekennzeichnet durch** die folgenden Schritte:
Ausbilden einer harten Keramikbeschichtung (2) mit einer Oberflächenrauheit von ungefähr 10 µm und großen Fluktuationen in der Dicke auf einer Oberfläche (1) eines Basismetalls **durch** eine Entladungs-Oberflächenbehandlung in einem Bearbeitungsfluid unter Verwendung einer Grünkörperelektrode, die **durch** Komprimieren und Formen von Pulvern hergestellt ist, die aus metallischen Pulvern, die zum Karbonisieren tendieren, oder aus Metallcarbidpulvern besteht, wobei
die harte Keramikbeschichtung (2) im Wesentlichen aus wenigstens einem metallischen Element besteht, das aus der Gruppe ausgewählt ist, die aus TiC, TiN, SiC, B₄C, Chromcarbid, VC, ZrC, Niobcarbid, Molybdencarbid und WC besteht und
sie eine höhere Konzentration des Basismetallgehalts an einer Position näher an der Oberfläche aufweist, und
Ausbilden einer metallbasierten Beschichtung (3) auf der harten Keramikbeschichtung, wobei die metallbasierte Beschichtung im Wesentlichen aus einem metallischen Element besteht, das aus der Gruppe ausgewählt ist, die aus Cr, Ni, Fe, W und Mo besteht.

2. Verfahren zum Herstellen einer Laserbearbeitungsdüse, einer Schweißdüse oder einer Kontaktspitze zum Schweißen, das Verfahren mit:
dem Herstellen eines Körpers der Laserbearbeitungsdüse, der Schweißdüse oder der Kontaktspitze, wobei der Körper eine Metalloberfläche aufweist, und
dem Ausbilden der Beschichtung des Anspruchs 1 auf der Metalloberfläche (1) des Körpers.

3. Verfahren nach Anspruch 2, bei dem
die metallbasierte Beschichtung (3) durch eine Oberflächenbehandlung ausgebildet wird.

4. Verfahren nach einem der Ansprüche 1 bis 3, bei dem das Basismetall im Wesentlichen aus Kupfer, Eisen oder Aluminium besteht.

5. Laserbearbeitungsdüse, Schweißdüse oder Kontaktspitze zum Schweißen mit:
einem Körper mit einer Metalloberfläche (1) und
einer Beschichtung, die auf der Metalloberfläche des Körpers ausgebildet ist, **dadurch gekennzeichnet, dass** die Beschichtung aufweist
eine harte Keramikbeschichtung (2), die auf der Metalloberfläche des Körpers ausgebildet ist, und
eine metallbasierte Beschichtung (3),
wobei die metallbasierte Beschichtung (3), die im Wesentlichen aus wenigstens einem metallischen Element besteht, das aus einer Gruppe ausgewählt wurde, die aus Cr, Ni, Fe, W und Mo besteht, auf der harten Keramikbeschichtung ausgebildet ist,
wobei die harte Keramikbeschichtung (2) eine Oberflächenrauheit von ungefähr 10 µm aufweist, wobei eine Dicke der harten Keramikbeschichtung (2) große Fluktuationen aufweist und sie eine Vickers-Härte von 1.000 oder höher aufweist und
sie im Wesentlichen aus wenigstens einem metallischen Element besteht, das aus der Gruppe ausgewählt wurde, die aus TiC, TiN, SiC, B₄C, Chromcarbid, VC, ZrC, Niobcarbid, Molybdencarbid und WC besteht und
wobei die harte Keramikbeschichtung (2) eine höhere Konzentration eines Basismetalls im Körpergehalt an einer Position näher an der Metalloberfläche aufweist.

6. Düse oder Kontaktspitze zum Schweißen nach Anspruch 5, bei welcher der Körper im Wesentlichen aus Kupfer, Eisen oder Aluminium besteht.

## Revendications

1. Procédé de formation d'un revêtement sur une buse de traitement au laser, une buse de soudure ou une pointe de contact pour soudage, le procédé étant **caractérisé par** les étapes suivantes :
la formation d'un revêtement céramique dur (2) avec une rugosité de surface d'approximativement 10 micromètres et de grandes fluctuations de l'épaisseur sur une surface (1) d'un métal de base par un traitement de surface par décharge dans un fluide de traitement en utilisant une électrode comprimée en cru obtenue en comprimant et en moulant des poudres consistant principalement en poudres métalliques qui ont tendance à être des poudres de carbure de métal ou carbonées ; dans lequel
le revêtement céramique dur (2) consiste principalement en au moins un élément métallique sélectionné à partir d'un groupe constitué par Tic, TiN, SiC, B₄C, carbure de Chrome, VC, ZrC, carbure de niobium, carbure de molybdène et WC, et
a une concentration de la teneur en métal de base plus élevée à une position plus proche de la surface, et
la formation d'un revêtement à base de métal (3) sur le revêtement céramique dur, le revêtement à base de métal consistant principalement en au moins un élément métallique sélectionné à partir d'un groupe constitué par Cr, Ni, Fe, W et Mo.

2. Procédé de fabrication d'une buse de traitement au laser, d'une buse de soudure ou d'une pointe de contact pour soudage, le procédé comprenant :
la fabrication d'un corps de la buse de traitement au laser, de la buse de soudure ou de la pointe de contact, le corps ayant une surface métallique ; et la formation du revêtement de la revendication 1 sur la surface métallique (1) du corps.

3. Procédé selon la revendication 2, dans lequel le revêtement à base de métal (3) est formé par un traitement de surface.

4. Procédé selon l'une quelconque des revendications 1 à 3, dans lequel le métal de base consiste principalement en l'un quelconque de cuivre, de fer ou d'aluminium.

5. Buse de traitement au laser, buse de soudure ou pointe de contact pour soudage, comprenant :
un corps ayant une surface métallique (1) ; et
un revêtement formé sur la surface métallique du corps, **caractérisé en ce que** le revêtement inclut
un revêtement céramique dur (2) formé sur la surface métallique du corps, et
un revêtement à base de métal (3),
dans lequel le revêtement à base de métal (3) consiste principalement en au moins un élément métallique sélectionné à partir d'un groupe constitué par Cr, Ni, Fe, W et Mo formé sur le revêtement céramique dur,
dans lequel le revêtement céramique dur (2) a une rugosité de surface d'approximativement 10 micromètres, une épaisseur du revêtement céramique dur (2) ayant de grandes fluctuations, et a une dureté Vickers de 1 000 ou plus, et
consiste principalement en au moins un élément métallique sélectionné à partir d'un groupe constitué par Tic, TiN, SiC, B₄C, carbure de Chrome, VC, ZrC, carbure de niobium, carbure de molybdène et WC, et
le revêtement céramique dur (2) a une concentration d'un métal de base de la teneur de corps plus élevée à une position plus proche de la surface métallique.

6. Buse ou pointe de contact pour soudage selon la revendication 5, dans laquelle le corps consiste principalement en l'un quelconque de cuivre, de fer ou d'aluminium.
